# EUROPEAN PATENT APPLICATION

(11) **EP 1 968 141 A1**
(43) Date of publication of application: **10.09.2008**
(21) Application number: 08250617.1
(22) Date of filing: 22.02.2008
(51) Int. Cl.: H01M 4/58

(54) **Secondary battery**

(30) Priority: 24.02.2007 JP 2007044791; 19.02.2008 JP 2008037406
(71) Applicant: NGK INSULATORS, LTD., Nagoya-City, Aichi Pref. 467-8530 (JP); Kyushu University, Higashi-ku, Fukuoka-shi Fukuoka-ken (JP)
(72) Inventor: Okada, Shigeto, Fukuoka-ken (JP); Kobayashi, Eiji, Fukuoka-ken (JP); Yamaki, Jun-ichi, Fukuoka-ken (JP); Larisa, Plashnitsa, Fukuoka-ken (JP); Noguchi, Yoshinori, Fukuoka-ken (JP); Doi, Takayuki, Fukuoka-ken (JP); Yoshida, Toshihiro, Nagoya City Aichi-ken, 467-8530 (JP); Yamamoto, Kazuhiro, Nagoya City Aichi-ken, 467-8530 (JP); Katsukawa, Hiroyuki, Nagoya City Aichi-ken, 467-8530 (JP)
(74) Representative: Paget, Hugh Charles Edward

(57) **Abstract**

The present invention provides a secondary battery using a liquid electrolyte excellent in storage characteristics. The secondary battery includes a cathode, an anode, and a liquid electrolyte, where the cathode and the anode contain at least one mutual active material. This symmetrical electrode configuration, that the at least one active material for the cathode and the anode is mutual, enables equalization of an electrode electric potential difference before charge or after discharge; and thus electrolyte degradation is efficiently restrained to improve storage characteristics.

## Description

### [FIELD OF TECHNOLOGY]

The present invention relates to a secondary battery including a liquid electrolyte excellent in storage characteristics and safety.

### [DESCRIPTION OF BACKGROUND OF ART]

Recently, as portable devices such as personal computers and cellular phones have been developed, a need for batteries as a power supply thereto has largely increased. As the batteries for this application, a liquid electrolyte (electrolyte liquid) as a medium for transporting ions such as an organic solvent is widely used. Moreover, a secondary battery in which an ionic liquid is used as an electrolyte, which is a room-temperature molten salt, has been studied in order to improve safety. The ionic liquid is not combustible, and is not vaporized at room temperature, and it is thus expected that a possibility of ignition caused by leakage be decreased.

Secondary batteries using the Li ion as a conductive cation component are known as a secondary battery using such an ionic liquid. One such secondary battery uses a lithium oxide as the cathode, and carbon or a lithium alloy as the anode (refer to Japanese Patent Publication Laid-Open No. H4-349365, for example). Moreover, a battery is known where an oxide, a sulfide, or a nitride of a metal is used for the anode (refer to Japanese Patent Publication Laid-Open No. H10-92467), and a battery where the anode is more noble than the metal lithium by 1V (refer to Japanese Patent Publication Laid-Open No. Z001-319688).

### [SUMMARY OF THE INVENTION]

However, a protection device or package is indispensable for a secondary battery using an organic-solvent type liquid electrolyte in order to secure the safety thereof. Moreover, in the secondary battery according to Japanese Laid-Open Patent Publication No. H4-349365 in which an ionic liquid is used as the electrolyte, the ionic liquid is reduced since the anode is a base, resulting in a tendency of a decrease in cycle characteristics. Further, in the batteries according to Japanese Laid-Open Patent Publication No. H10-92467 and No. 2001-319688, though the electric potential of the anode is relatively high and an ionic liquid reduction is thus restrained, the overall electric potential of a battery decreases.

In addition, the inventors conceived that the conventional secondary batteries are configured to always generate an electric potential difference between the cathode and anode materials, and a degradation of the electrolyte is thus accelerated, resulting in a decrease of the storage characteristics.

On the other hand, though using the sodium ion as a conductive cation component may be more beneficial in cost than using the lithium ion, it cannot be considered that a proper anode material has been found. Moreover, the issues of safety (in construction and operation have not yet been solved) on the deposition and the like have not been solved.

In view of the foregoing problems, it is one object of the present invention to provide a secondary battery using a liquid electrolyte excellent in storage characteristics. Moreover, it is another object of the present invention to provide a secondary battery using a liquid electrolyte exemplary in safety. It is a further object of the present invention to provide a manufacturing method of the secondary battery using the liquid electrolytes excellent in storage characteristics and safety.

The present inventors have found that a secondary battery excellent in storage characteristics can be provided by using the mutual compound for active materials of the cathode and the anode, and have completed the present invention. Moreover, the present inventors simultaneously found that a second battery, using as the electrolyte an ionic liquid excellent in storage characteristics and safety, can be provided by using a material having the so-called NASICON structure, as in a active material, for the cathode and the anode. The present invention provides the following means based upon the above knowledge.

The present invention provides a second battery including a cathode, an anode, and a liquid electrolyte, where the cathode and the anode contain at least one mutual active material.

According to the present secondary battery, there is also provided the above-described second battery where the at least one mutual active material contains a material represented by the following formula (1):

MₐN_{b}Cₓ (1)

, where M denotes any one selected from the group consisting of H, Li, Na, Mg, Al, K, and Ca; N denotes at least one selected from the group consisting of transition metals, Al, and Cu; X denotes a polyanion of at least one type selected from the group consisting of SiO₄, PO₄, MoO₄, SO₄, WO₄, BO₄, and BO₃; "a" denotes a number from 0 to 5, "b" denotes a number from 1 to 2, and "c" denotes a number from 1 to 3.

Further, either one of the above secondary batteries is also provided where the at least one mutual active material has a NASICON structure.

Moreover, according to the present invention, any one of the above secondary batteries is provided where the liquid electrolyte contains, as a conductive cation component, any one ion selected from the group consisting of H, Li, Na, Mg, Al, K, and Ca. Also, in any one of the above secondary batteries the at least one mutual active material contains the same metal as a metal ion constituting a conductive cation component of the liquid electrolyte.

Further, according to the present invention, any one of the above secondary batteries is also provided where the liquid electrolyte contains an ionic liquid.

According to the present invention, a manufacturing method of a secondary battery that comprises a cathode, an anode, and a liquid electrolyte, including an electrode producing step of producing the cathode and the anode containing the at least one mutual active material is also provided. Moreover, included in the above manufacturing method of the electrode producing step, a material is used as the active material for the cathode and the anode, having a NASICON structure represented by the above formula (1), and either one of the above manufacturing methods further includes a secondary battery producing step where a secondary battery includes, as the liquid electrolyte, an ionic liquid containing an ion of M in the formula (1) as a conductive cation component.

### [DESCRIPTION OF THE DRAWINGS]

FIG. 1 shows an example of a manufacturing process of a battery according to the present invention;
FIG 2 shows a charge/discharge profile of a battery 1 produced in an example 1;
FIG 3 shows a charge/discharge profile of a battery 2 produced in the example 1;
FIG 4 shows a charge/discharge profile of a battery 3 produced in the example 1;
FIG 5 shows a charge/discharge profile of a battery 4 produced in the example 1; and
FIG 6 shows a charge/discharge cycle characteristic of the battery 3 produced in the example 1.

### [DETAILED DESCRIPTION OF THE INVENTION AND PREFERRED EMBODIMENT]

A second battery according to the present invention includes a cathode, an anode, and a liquid electrolyte, where the cathode and the anode can contain the at least one mutual active material. Due to this symmetrical electrode configuration, where the active materials for the cathode and the anode contain at least one mutual compound, it is possible to produce/make an electrode electric potential difference of zero or close to zero before a charge or after a discharge. As a result, electrolyte degradation is efficiently restrained, and thereby the storage characteristics are improved. Moreover, since an electrode active material having the NASICON structure has a proper electric potential which will not reduce an ionic liquid containing ions of the same metal as a conductive cation component, a secondary battery using these materials for the electrodes and the electrolyte can provide excellent storage characteristics and safety.

Moreover, since the electrodes contain the at least one mutual active material, volume change of both the electrodes on charge and discharge can be canceled out, and inconvenience due to a difference in the volume change of both the electrodes can be avoided by easy prediction of the volume change.

A manufacturing method of a secondary battery according to the present invention provides a manufacturing method which includes an electrode producing step of producing the cathode and the anode containing the at least one mutual active material. Providing this electrode producing step enables the manufacturing of a secondary battery in which the electrode electric potential difference is zero or close to zero, thereby constructing a secondary battery excellent in storage characteristics. Moreover, the electrodes containing the at least one mutual active material enable the efficient and simple electrode producing step. This symmetrical electrode configuration in which the active materials for the cathode and the anode are the same compound realizes easy equalization of the electrode electric potential difference before charge and after discharge, thereby causing an efficient decrease of electrolyte degradation, resulting in improvement in storage characteristics. Moreover, since an electrode active material having the NASICON structure has an especially proper electric potential which will not reduce an ionic liquid containing ions of the same metal as a conductive cation component, a secondary battery using these materials for the electrodes and the electrolyte can provide excellent storage characteristics and safety.

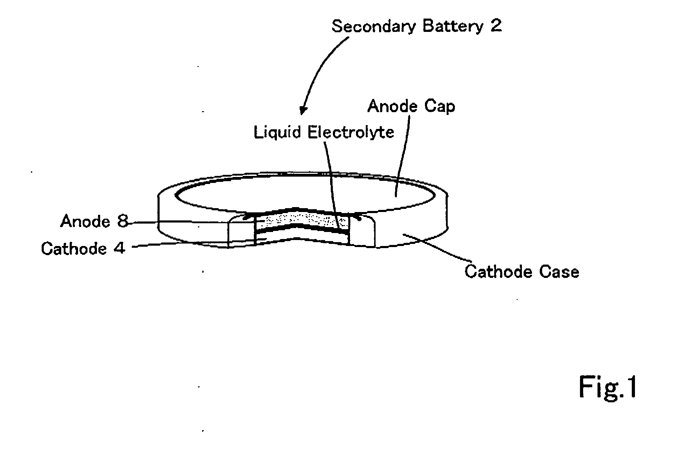

A description will now be given sequentially of the secondary battery and the manufacturing method thereof, which are embodiments of the present invention, with proper reference to the drawings. FIG. 1 shows an embodiment of the secondary battery according to the present invention.

### (Secondary Battery)

The secondary battery 2 according to the present invention includes a cathode 4, an anode 8, and a liquid electrolyte 12 as shown in FIG 1. It should be noted that the cathode 4 and the anode 8 are electrically connected to the respective collectors, which are not shown.

### (Cathode)

In the secondary battery 2 according to the present invention, the cathode 4 may be a similar embodiment to a conventionally known secondary battery provided with a liquid electrolyte. The shape, size, and the like of the electrode are not specifically limited, and can be properly set corresponding to the existing form and the manufacturing method of this secondary battery 2.

The cathode 4 can contain a cathode active material. A cathode active material which can be used for this secondary battery 2 can contain at least one mutual active material for an anode as to be described later. Various metal compounds and the like can be used as the cathode active material. Specific examples of the cathode active material may include a lithium phosphate compound or a sodium phosphate compound.

Moreover, a cathode active material expressed by the following formula (1) may be included.

MₐN_{b}Cₓ (1)

It should be noted that M in the formula (1) denotes any one element selected from the group consisting of H, Li, Na, Mg, Al, K and Ca, and preferably denotes any one element selected from the group consisting of Li, Na, and Mg. Moreover, X in the formula (1) is preferably a polyanion of at least one type selected from the group consisting of SiO₄, PO₄, SO₄, MoO₄, WO₄, BO₄, and BO₃. X is more preferably PO₄ or MoO₄. Further, "a" denotes a number from 0 to 5, "b" denotes a number from 1 to 2, and "c" denotes a number from 1 to 3 in the formula (1). Moreover, N is at least one element selected from the group consisting of transition metals, Al, and Cu, and preferably at least one type selected from the group consisting of Fe, Co, V, and Cu in the formula (1).

The material expressed by the formula (1) may be of a NASICON structure. Specific examples of these cathode active materials include LiFePO₄, LiCoPO₄, LiNa₂PO₄, Li₃V₂(PO₄)₃, Na₃V₂(PO₄)₃, LiVPO₄F, and NaVPO₄F. The cathode active materials are more preferably Li₃V₂(PO₄)₃, Na₃V₂(PO₄)₃, or LiVPO₄F.

It should be noted that the cathode 4 may properly contain an electron conduction aid and a binder in addition to the cathode active material. The electron conduction aid includes acetylene black, carbon black, graphite, various carbon fibers, and/or carbon nanotubes, for example. The binder includes polyvinylidene fluoride (PVDF), SBR, polyimide, and/or polytetrafluoroethylene, for example. Moreover, these active materials may be used individually or in combination for the cathode 4.

### (Anode)

The anode 8 may be a similar embodiment to that of a conventionally known secondary battery provided with a liquid electrolyte, as the cathode 4. The shape, size, and the like of the electrode are not specifically limited, and can be properly set corresponding to the existing form and the manufacturing method of this secondary battery 2.

The anode 8 can contain an anode active material. An anode active material which can be used for this secondary battery 2 can contain at least one mutual active material for the above-described cathode, as to be described later. It means that the active material, which can be preferably used as the active material for the cathode 4, can also be similarly used as the active material for the anode 8. It should be noted that the anode 8 may properly contain an electron conduction aid and a binder in addition to the anode active material, as in the cathode 4. Moreover, these active materials may be used individually or in combination for the anode 8.

### (Liquid Electrolyte)

A non-aqueous solvent type (organic solvent type) electrolyte and an ionic liquid may be used as the liquid electrolyte 12. A non-aqueous solvent includes carbonate ester type solvent such as ethylene carbonate (EC), diethyl carbonate (DEC), dimethyl carbonate (DMC), or propylene carbonate (PC); γ-butyrolactone, tetrahydrofuran, acetonitrile, or the like. A single solvent or mixed solvent of these non-aqueous solvents can be used preferably as a non-aqueous solvent of the non-aqueous solvent type electrolyte. Moreover, the electrolyte used for the non-aqueous solvent includes a lithium complex fluorine compound such as lithium hexafluorophosphate (LiPF₆) or lithium tetrafluoroborate (LiBF₄), a sodium complex fluorine compound such as sodium hexafluorophosphate (NaPF₆) or sodium tetrafluoroborate (NaBF₄), a sodium halide such as sodium perchlorate (NaClO₄), or sodium bis (oxalato) borate (NaBOB); or such electrolyte can be solved (dissolved) in the above solvent individually or in combination. LiPF₆ and NaPF₆ especially, which hardly present oxidative decomposition, and provide a high conductivity of the non-aqueous electrolyte, are preferably used.

On this occasion, the ionic liquid is a material which has an ionic bonding property with a low melting point, and is thus liquid at the room temperature. The ionic liquid has an extremely low volatility, is incombustible, and is excellent in conductivity and heat resistance.

A cation constituting the ionic liquid includes N, N'-dialkyl imidazolium cation and N-alkyl pyridinium cation. Specific examples of N, N'-dialkyl imidazolium cation especially include 1-butyl-3-methyl imidazolium cation, 1, 3-dimethyl imidazolium cation, 1, 3, 4-trimethyl imidazolium cation, 1-ethyl-3-methyl imidazolium cation (EMI), 1-hexyl-3-rnethyl imidazolium cation, and 1-methyl-3-octhyl imidazolium cation, and 1-ethyl-3-methyl imidazolium cation is preferable from among the above. Moreover, 1-butyl pyridinium cations among N-alkyl pyridinium cations are especially preferable. The ionic liquid constituted by these cations is excellent in ion conductivity, chemical stability, and electrochemical stability.

Moreover, at least one of the anions constituting the ionic liquid are preferably selected from the group consisting of BF₄⁻, PF₆⁻, (CF₃SO₂)₂N⁻, CF₃CO₂⁻, and CF₃SO₃⁻. The ionic liquid constituted by these fluoride anions has a high thermal stability, and is thus hard to decomposed at a high temperature. A combination of 1-ethyl-3-methyl imidazolium cation and (CF₃SO₂)₂N⁻ is especially preferable.

A combination of an ionic liquid and an electrolyte is preferably used as the liquid electrolyte 12. The liquid electrolyte 12 preferably contains any one ion selected from the group consisting of H, Li, Na, Mg, Al, K, and Ca as the conductive cation component. Using an ionic liquid, as the liquid electrolyte 12, which contains Na or Li as the conductive cation component especially improves the output and the storage characteristics. Further, using Na as the conductive cation component, and thereby causing the ionic liquid to contain Na, improves the storage characteristics and additionally the cost of the secondary battery 2. It is also advantageous that Na does not form a passivation film.

If a combination of an ionic liquid and an electrolyte is used as the liquid electrolyte 12, it is preferable for the electrolyte to be contained in the range from 0.1 mol/l to 1.5 mol/l with respect to the total amount. The mixture at this compounding ratio provides safety of the ionic liquid, and the benefits of the conductivity and the cost brought about by conductive cation components such as Na or Li. It is more preferable for the electrolyte to be contained in a range from 0.3 mol/l to 1.2 mol/l with respect to the total amount.

In the secondary battery 2 according to the present invention, the liquid electrolyte preferably contains an ionic liquid. The ionic liquid is non-volatile, incombustible, highly ion conductive, and chemically stabile, and thus can constitute a secondary battery exemplary in safety. Moreover, the ionic liquid preferably contains any one ion selected from the group consisting of H, Li, Na, Mg, Al, K, and Ca as the conductive cation component. It is more preferable to use, as the liquid electrolyte, an ionic liquid which contains, as the conductive cation component, the same ion as that constitutes the active material of the cathode and anode, namely an ion of M in the formula (1). A secondary battery which is excellent in storage characteristics, output, and the safety can thus be easily manufactured.

### (Active Material in Cathode and Anode)

In the secondary battery 2 according to the present invention, the cathode 4 and the anode 8 may contain the at least one mutual active material. Using the mutual compound for the active materials for both the cathode and anode easily causes the substantial electric potential difference to be zero or close to zero, and thereby resulting in the electric potential difference before a charge and after a discharge to be zero or close to zero. As a result, the electrolyte degradation caused by the electrolysis due to the electric potential difference between the cathode and anode can be restrained, and thereby remarkably increasing the storage characteristics for/over a long period.

On this occasion, the fact that the cathode 4 and the anode 8 contain at least one mutual active material means that they contain at least one type of the same active material. All active materials of the cathode 4 and the anode 8 are preferably the same. It should be noted that the compounding ratios of the same active materials contained in the cathode 4 and the anode 8 can be the same. Typically, the cathode 4 and the anode 8 can contain a single and the same active material.

The at least one mutual active material represented by the formula (1) is preferably used for the same active materials in the cathode and the anode. This is because the active material represented by the formula (1) can easily provide preferable electrode electric potentials. Especially, if the active material is a NASICON structure material using Li or Na as the active material M represented by the formula (1), it is possible to efficiently decrease the internal resistance. Moreover, in this case, the active material more preferably has a NASICON structure, and contains PO₄ as X. Also, the liquid electrolyte preferably contains an ionic liquid. This is because the active material represented by the formula (1) has a proper, the ionic liquid reduction-free electric potential (approximately 1V with respect to Li).

Both the active material of the cathode 4 and the active material of the anode 8 preferably contain the metal (M) which is the same as the metal ion constituting the conductive cation component of the liquid electrolyte 12. Since this configuration causes the mutual ion conductivity to increase and thereby causes a characteristic for a large current supply and improvement in the charge/discharge characteristic, the secondary battery 2 is provided with high output and excellent storage characteristics. Moreover, in this case, if the liquid electrolyte 12 is an ionic liquid, and the conductive cation component is Li or Na, an even higher output is expected.

Moreover, if an ion conductor containing Na ion as the conductive cation component is used as the liquid electrolyte 12 as described above, a sodium ion secondary battery 2 is realized with the excellent safety and the storage characteristic, which are difficult for conventional Na batteries to realize, while enjoying the cost merit and the merit as the cation component of the Na.

The battery structure of the secondary battery 2 according to the present invention is not specifically limited, and thus may be various structures which can be constituted by the electrolyte materials and electrode materials according to the present invention. These structures include various batteries including a coin battery which is constructed by providing a separator between a cathode active material and an anode active material formed into a plate shape, and filling an electrolyte, and cylindrical and prismatic batteries which use an electrode assembly constructed by winding or laminating a cathode plate constructed by applying a cathode active material on a surface of a metal foil and an anode plate constructed by applying an anode active material on a surface of a metal foil while a separator is interposed.

### (Manufacturing method of Secondary Battery)

A manufacturing method of a secondary battery according to the present invention may include an electrode producing step of producing a cathode and an anode containing the at least one mutual active material. On this occasion, the above-described various embodiments for the secondary battery 2 according to the present invention may be directly applied to the configuration of the cathode 4 and the anode 8, the active materials used for respective of them, and the liquid electrolyte 12.

The at least one mutual active material is applied to the cathode 4 and the anode 8 in the manufacturing method of the secondary battery 2. This can simplify the manufacturing process as well as can increase the storage characteristic of the secondary battery 2.

If the volumes of the cathode 4 and the anode 8 are the same, the changes in volume on a charge and discharge are synchronized, thereby always canceling out the changes in volumes.

The present manufacturing method further includes a secondary battery producing step of producing a secondary battery using an ionic liquid containing an ion of M in the formula (1) as a conductive cation component. A secondary battery which is excellent in the storage characteristic, the output, and the safe thus can be easily manufactured.

### [EXAMPLES]

A description will now be given of the present invention while showing examples. The following examples are provided for illustrating the present invention, and are not intended to limit the present invention.

### [EXAMPLE 1]

Secondary batteries having various electrode configurations were produced in a present example. Table 1 shows the electrode configurations of the produced secondary batteries.

**[Table 1]**

| Type of battery | Cathode | Liquid electrolyte | Anode |
|---|---|---|---|
| Battery 1 | LVP | LiBF₄(1mol/l)/EMIBF₄ | LVP |
| Battery 2 | NVP | NaClO₄(1mol/l)/PC | NVP |
| Battery 3 | NVP | NaBF₄(0.4mol/l)/EMIBF₄ | NVP |
| Battery 4 | LVPF | LiBF₄(1mol/l)/EMIBF₄ | LVPF |

| | | | |
|---|---|---|---|
| LVP: Li₃V₂(PO₄)₃ NVP: Na₃V₂(PO₄)₃ LVPF: LiVPO₄F | | | |

An electrode active material NVP (Na₃V₂(PO₄)₃), which is a NASICON structure material, was produced by baking 3NaH₂PO₄ and V₂O₃ at 900°C in an argon atmosphere containing 5% of hydrogen for 20 hours twice. An X ray diffraction was carried out for the produced ceramic powders, and a peak was observed according to a specific crystal structure. Moreover, another electrode active material LVP (Li₃V₂(PO₄)₃) was produced by baking 3LiH₂PO₄ and V₂O₃ at 900°C in an argon atmosphere containing 5% of hydrogen for 20 hours twice. An X ray diffraction was carried out for the produced ceramic powders, and a peak was observed according to a specific crystal structure.

Further, LVPF (LiVPO₄F), which belongs to the triclinic system, and has a backbone structure, which is a combination of a tetrahedron of PO₄ and an octahedron of VO₄F₂, was produced by the following method. In other words, LVPF was produced by baking V₂O₅ and NH₄PO₄ according to the carbothermal method at 700°C in an argon atmosphere for four hours, and by baking obtained VPO₄ and LiF at 700°C in an argon atmosphere for one hour. An X ray diffraction was carried out for the produced ceramic powders, and a peak was observed according to the specific crystal structure.

The liquid electrolytes having the respective three types of compositions shown in Table 1 were provided. The ionic liquid and the electrolyte were commercially obtained.

Coin cell type secondary batteries were produced using these battery materials according to a usual manner. In other words, the electrode active material and the electron conduction aid (acetylene black of a 50% pressed product from DENKI KAGAKU KOGYO KABUSHIKI KAISHA) were weighted to a weight ratio of 70:25, and were mixed using an agate mortar for approximately 15 minutes. Polytetrafluoroethylene, which is a binding agent, was weighted so that a weight ratio thereof in the evenly mixed specimen was 95:5, and was bound using an agate mortar. An obtained electrode material was bored by a cork borer having a diameter of 10 mm for the cathode, and by a cork borer with a diameter of 15 mm for the anode, thereby forming pellets in a disk shape.

The coin cells were produced in the following way. A cathode side part was produced by cutting a titan wire mesh into a circle with a diameter of 10 mm, then spot-welding the cut wire mesh to a spacer, and further spot-welding the resulting part to a coin cell case (R2032). The cathode pellet is placed on, and then is crimped to the spot-welded part. An anode side part was produced by cutting a nickel wire mesh into a circle having a diameter of 15 mm as a collector, then spot-welding the cut wire mesh to the spacer, and placing and crimping the cathode pellet on and to the spot-welded part. Further, a disc spring was spot-welded to the coin cell case (R2032), and a gasket is placed over it. The finished coin cell part was dried under vacuum for approximately 14 hours at 100°C using a glass tube oven, and was then moved to a glove box filled with argon (dew point is equal to or less than -85°C). The coin cells were assembled by placing the anode pellets on an anode case, filling an electrolyte or an ionic liquid, placing over a polypropylene micro porous film separator having a diameter of 19mm, placing over the cathode part, and sealing the coin cell by a crimping machine.

### [EXAMPLE 2]

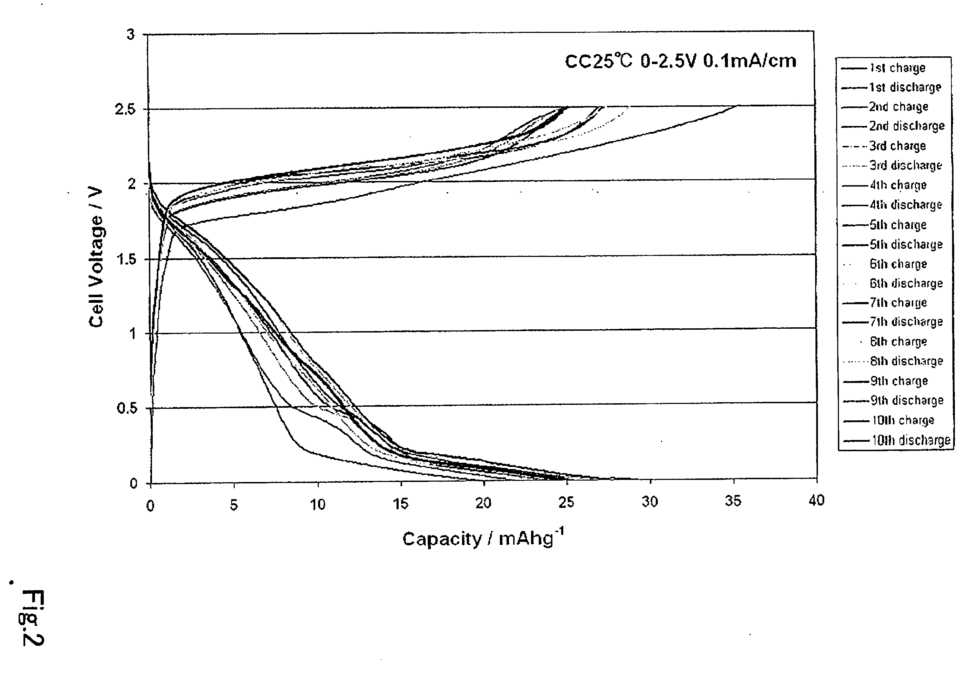

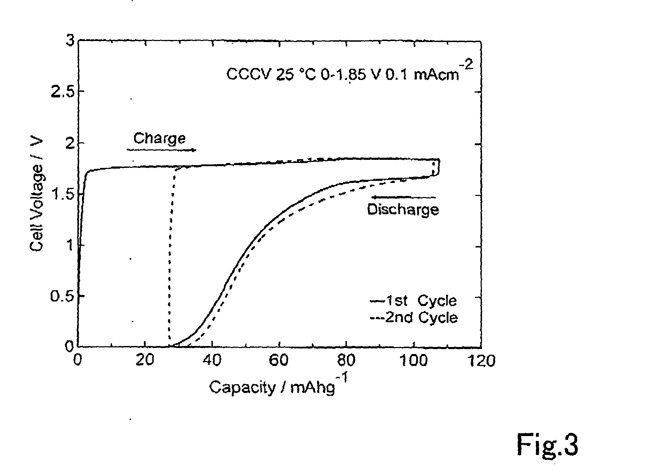

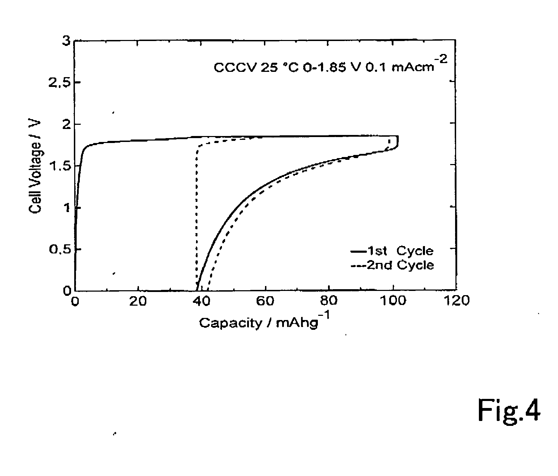

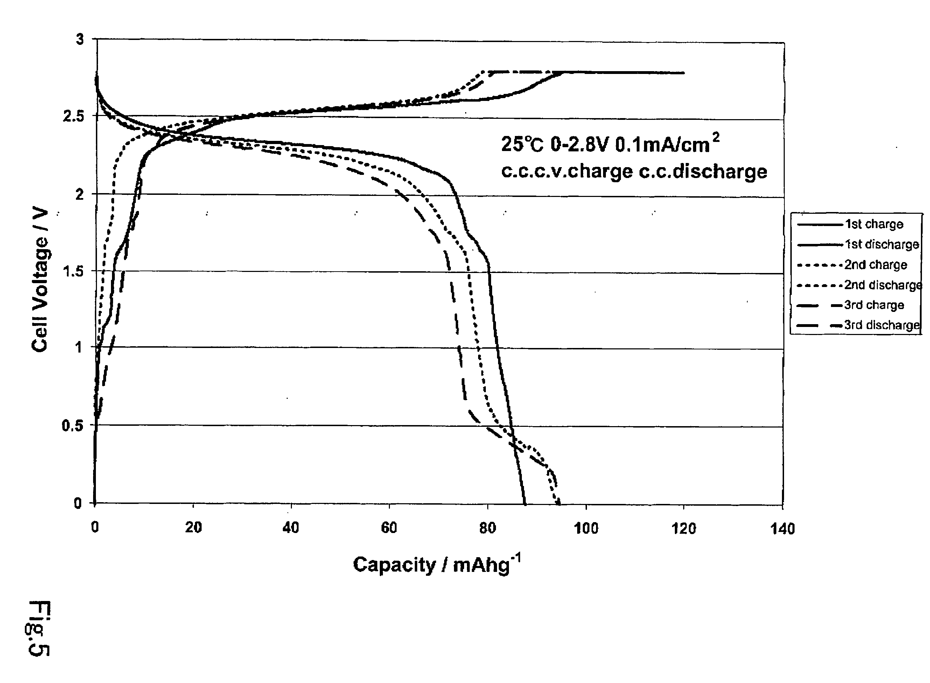

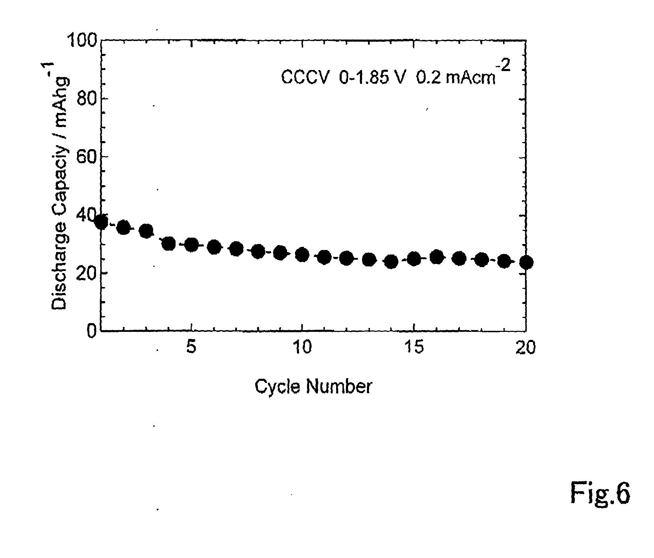

According to a present example, charge/discharge profiles were measured respectively for the four types of coin cell type secondary batteries produced in the example 1. It should be noted that charge/discharge characteristics were measured at 25°C for the LVP type in a voltage range from 0 to 2.5 V at a constant current charge/discharge of 0.1 mA/cm², and for the NVP types in a voltage range from 0 to 1.85 V at a constant current/constant voltage charge and a constant current discharge of 0.1 mA/cm². Moreover, the charge/discharge characteristic was measured for the LVPF type in a voltage range from 0 to 2.8 V at a constant current/constant voltage charge and a constant current discharge of 0.1 mA/cm². FIG 2 to FIG 5 respectively show results for the batteries 1 to 4. Moreover, FIG 6 shows a charge/discharge cycle characteristic (25°C, 0 - 1.85 V, and 0.2 mA/cm²) of the battery 3 (coin cell containing NVP as the cathode active material, NaBF₄/EMIBF₄ as the electrolyte, and NVP as the anode active material).

The respective coin cells presented favorable charge/discharge behaviors as shown in FIG. 2 to FIG 5. Moreover, the battery 3 presented a favorable charge/discharge cycle characteristic as shown in FIG 6. From the above results, it has been found out that a secondary battery excellent in the storage characteristic can be built by using the same compound as the active materials for the cathode and the anode, and using an ionic liquid and/or a non-aqueous solvent type electrolyte as the liquid electrolyte. Moreover, it has been found out that a secondary battery using an ionic liquid containing Na salt as the liquid electrolyte can be build by using a NASICON structure material. Therefore, a secondary battery can be provided with the excellent safety and the storage characteristic, while using Na, which is cheap and free from energy depletion possibility, as the conductive cation component.

## Claims

1. A secondary battery comprising: a cathode, an anode, and a liquid electrolyte, wherein said cathode and said anode contain at least one mutual active material.

2. The secondary battery according to claim 1, wherein said at least one mutual active material contains a material represented by the following formula (1):
MₐN_{b}Cₓ (1)
, where M denotes any one selected from the group consisting of H, Li, Na, Mg, Al, K, and Ca; N is at least one type selected from the group consisting of the transition metals, Al, and Cu; X denotes a polyanion; "a" denotes a number from 0 to 5, "b" denotes a number from 1 to 2, and "c" denotes a number from 1 to 3.

3. The secondary battery according to claim 2, wherein said polyanion is at least one type selected from the group consisting of SiO₄, PO₄, SO₄, MoO₄, WO₄, BO₄, and BO₃.

4. The secondary battery according to any one of claims 1 to 3, wherein said at least one mutual active material has a NASICON structure.

5. The secondary battery according to any one of claims 1 to 4, wherein said liquid electrolyte contains, as a conductive cation component, any one ion selected from the group of ions consisting of H, Li, Na, Mg, Al, K, and Ca.

6. The secondary battery according to any one of claims I to 5, wherein said at least one mutual active material contains the mutual metal as a metal ion constituting a conductive cation component of said liquid electrolyte.

7. The secondary battery according to any one of claims 1 to 6, wherein said liquid electrolyte contains an ionic liquid.

8. A manufacturing method of a secondary battery that comprises a cathode, an anode, and a liquid electrolyte, comprising an electrode producing step of producing the cathode and the anode containing at least one mutual active material.

9. The manufacturing method according to claim 8, wherein said electrode producing step is a step of using a material, as the at least one mutual active material, having a NASICON structure represented by the following formula (1):
MₐN_{b}Cₓ (1)
where M denotes any one selected from the group consisting of H, Li, Na, Mg, Al, K, and Ca, N is at least one selected from the group consisting of transition metals, Al, and Cu, X denotes a polyanion, "a" denotes a number from 0 to 5, "b" denotes a number from 1 to 2, and "c" denotes a number from 1 to 3.

10. The manufacturing method according to claim 9, wherein the polyanion is at least one selected from the group consisting of SiO₄, PO₄, SO₄, MoO₄, WO₄, BO₄, and BO₃.

11. The manufacturing method according to claim 9 or 10, further comprising a secondary battery producing step of producing a secondary battery comprising, as the liquid electrolyte, an ionic liquid containing an ion of M in the formula (1) as a conductive cation component.
